# EUROPEAN PATENT SPECIFICATION

(11) **EP 2 950 084 B1**
(45) Date of publication and mention of the grant of the patent: **02.09.2020**
(21) Application number: 15169624.2
(22) Date of filing: 28.05.2015
(51) Int. Cl.: G01N 22/04, G01G 11/00, G01G 17/04, G01B 11/06

(54) **METHOD AND APPARATUS FOR DETERMINING THE MOISTURE CONTENT OF A INHOMOGENEOUS BULK MATERIAL**
METHODE UND VORRICHTUNG ZUM BESTIMMEN DES FEUCHTEGEHALTES EINES INHOMOGENEN BULKMATERIALS
PROCÉDÉ ET DISPOSITIF POUR LA DÉTERMINATION D'UN TAUX D'HUMIDITÉ DANS UN MATÉRIAU EN VRAC NON-HOMOGÈNE

(30) Priority: 28.05.2014 NL 2012912
(43) Date of publication of application: 02.12.2015
(73) Proprietor: Coolen, Matheus J.M., 5527 CT Hapert (NL)
(72) Inventor: Coolen, Matheus J.M., 5527 CT Hapert (NL)
(74) Representative: Algemeen Octrooi- en Merkenbureau B.V.

(56) References cited:
- WO-A1-91/02966
- WO-A1-2004/029600
- KHURTSILAVA A K ET AL: "Study of the eddy current method for measuring the humidity of loose materials during their production examination", MEASUREMENT TECHNIQUES, KLUWER ACADEMIC PUBLISHERS-PLENUM PUBLISHERS, NE, vol. 49, no. 1, 2006, pages 71-74, XP019222940, ISSN: 1573-8906, DOI: 10.1007/S11018-006-0065-0

## Description

The present invention relates to a device and a method for determining the moisture content of an inhomogeneous bulk material such as woodchips or potato products.

WO 2004/029600 A1 relates to a sample analysis apparatus for measuring an amount of a component, such as moisture, in a sample.

WO 91/02966 A1 discloses the determination of the moisture content of a bulk material carried on a conveyor belt, based on microwave transmission measurements.

It is an object of the present invention to provide an accurate and versatile device for dynamically determining the moisture content of bulk material from a flow of inhomogeneous bulk material.

The above object is achieved with the device according to the invention for determining the moisture content of bulk material from a flow of inhomogeneous bulk material such as woodchips or potato products, comprising:
- a conveying element for conveying the bulk material in a conveying direction through the device for thus forming the flow of the bulk material, comprising a load-carrying surface for carrying the bulk material being conveyed, which load-carrying surface has a width transversely to the conveying direction,
- a displacement measuring device configured to determine displacement of the load-carrying surface in the conveying direction,
- a height determining device configured to determine, over at least substantially the entire width of the load-carrying surface, a height of the bulk material moving past the height determining device,
- a weighing device configured to determine a mass of bulk material present on the load-carrying surface in use, in a weighing region that extends over at least substantially the entire width of the load-carrying surface and over a length, seen in the conveying direction, at least equal to half the aforesaid width,
- a moisture content determining device comprising at least one moisture measuring sensor, preferably at least one in-line high-frequency moisture measuring sensor, which is configured to determine an amount of moisture in the bulk material present in a moisture measuring region that extends over a width of at least half the width of the load-carrying surface and a length, seen in the conveying direction, at least equal to half the aforesaid width, by irradiating the bulk material in the moisture measuring region, upward through the load-carrying surface of the conveying element, with electromagnetic radiation, at a frequency or frequencies from 1 Gigahertz to 3 Gigahertz,
   wherein the moisture content determining device is further operatively connected to the displacement measuring device, the height determining device and the weighing device, being configured to determine the moisture content of the bulk material on the basis of the displacement and the amount of moisture as determined and the height and mass as determined.

The skilled person will appreciate that, using the at least one high-frequency moisture measuring sensor, it is possible to determine an amount of moisture in the bulk material from a difference between emitted and received signals, which is a measure of the amount of moisture that is present in the bulk material.

An advantage of the device according to the invention is that, making use of the aforesaid displacement measuring device, height determining device, weighing device and moisture content determining device provided therein, the moisture percentage of the flow of the bulk material can be dynamically determined with a very high degree of accuracy over the entire width of the load-carrying surface. In contrast to known devices, no assumptions need to be made when using the device according to the invention, for example regarding the bulk density of the type of material, using additional equipment, on the basis of a random sample that is assumed to be representative. All the parameters that are relevant to the determination of the moisture content of a part of the material flow, such as the aforesaid amount of moisture, the height and the mass, are determined from that same part of the material flow through measurements carried out by the device itself. Because of the relatively large measuring regions that are used with the device according to the invention, a constant high degree of accuracy is realised with the device with varying compositions, such as a varying particle size, of a particular bulk material. As a result, the moisture content can be dynamically determined with a very high degree of accuracy. Fluctuations in, for example, the bulk density that occur in practice thus do not adversely affect the result of the moisture content determination. By using the at least one moisture sensor having the aforesaid characteristics, the device can be used with a large variety of bulk materials, among which also foodstuffs, such as potato products, such as French fries, without adversely affecting food safety, as is for example the case with X-rays. Furthermore, the exploitation costs are lower in comparison with the device that makes use of X-rays for determining the moisture percentage, in particular because significantly less safety precautions, among which safety precautions for individuals present near the device in use, need to be taken.

Using the height determining device in combination with the displacement measuring device, a volume flow of the bulk material can be dynamically determined. Using the weighing device in combination with the displacement measuring device, a mass flow of the bulk material can be dynamically determined. Making use of these data and the data regarding the amount of moisture determined using the at least one moisture sensor, the moisture percentage of the flow of the bulk material can be determined. Furthermore it is possible, using the device according to the invention, to directly calculate the energy content of biomass. Because biomass can exhibit a large variation in moisture content, the combustion value and thus the economic value strongly depends on this moisture content. From the moisture percentage and the mass flow as determined, the amount of energy the combustion of the dry matter of this biomass will yield can then be calculated, preferably by making use of the aforesaid moisture content determining device. From the result of said calculation, the energy needed for heating the moisture present in the biomass, usually water, to a temperature of 100 degrees Celsius and the amount of energy needed for subsequently causing the moisture to evaporate must then be subtracted.

Within the scope of the invention, the term "inhomogeneous bulk material" is understood to mean a bulk material having an uneven distribution and/or properties, such as the moisture content, that are unevenly distributed over the material or a flow of the material.

Within the scope of the invention, the term "dynamically determining" the moisture content is understood to mean the at least substantially continuous determination in use of the device of the moisture content of bulk material from the flow of bulk material through the device realised by the moving device. In a preferred embodiment of the device, a measurement or determination is carried out every few seconds at a velocity of the conveying element of a few tenths of a metre per second. The measurement or determination, for example of the mass, the height and the amount of moisture, may also be carried out more frequently or less frequently, for example within a range from a tenth of a second to dozens of seconds. The speed of the conveying element may also be higher or lower, for example ranging from a tenth of a metre per second to a few metres per second.

The at least one moisture measuring sensor is configured to irradiate the bulk material with electromagnetic radiation at a frequency or frequencies from 1 Gigahertz to 3 Gigahertz, more preferably from 1.25 GHz to 3 GHz, even more preferably from 1.5 GHz to 3 GHz.

Quite preferably, the device comprises a frame to which at least the conveying element, the weighing device, the displacement measuring device and the at least one moisture sensor, and preferably also the height determining device, are connected.

It is advantageous if the conveying element comprises a conveyor belt that forms the load-carrying surface. If the material of the conveyor belt is at least substantially homogeneous, preferably made of PVC or PU, or made up of a link belt, preferably of PP, a very accurate moisture content determination can be realised.

Preferably, the at least one moisture measuring sensor comprises a multitude of in-line moisture measuring sensors which are distributed in a grid-like pattern over the aforesaid moisture measuring region. In one embodiment, the moisture measuring sensors of said multitude of moisture measuring sensors are interconnected in a high-frequency circuit. As a result, the coverage of the system of interconnected sensors is very constant, resulting is a highly stable signal of a better quality.

Preferably, the moisture measuring region extends at least substantially symmetrically relative to a centre of the load-carrying surface, seen in transverse direction. In other words, seen in the transverse direction, the moisture measuring sensors are centrally provided in the device. In an advantageous preferred embodiment, the moisture measuring region extends over at least substantially the entire width of the load-carrying surface.

It is furthermore advantageous if the at least one moisture measuring sensor is configured to irradiate the bulk material with electromagnetic radiation at a power of less than about 1 milliwatt in the measuring region. Such a power level is safe for the material, within the context of food safety, and for the environment of the device, such as operators of the device. This makes the device quite versatile.

It is advantageous if the at least one moisture sensor is configured to irradiate the bulk material to a predetermined height thereof relative to the load-carrying surface in use. In this way a reliable measurement over a predetermined volume is ensured. Using the height determining device and the moving device, the amount of moisture thus detected in the predetermined volume can subsequently be converted into an amount of moisture in the volume of bulk material that is actually present in the moisture measuring region, whose (layer) height is in principle greater in use, or can be set to be greater, than the aforesaid predetermined height.

Within the context of the aim to achieve a high measuring accuracy it is advantageous if the length of the moisture measuring region is greater than, preferably two times greater than, the width of the moisture measuring region, more preferably greater than, even more preferably two times greater than, the width of the load-carrying surface.

Within this context it is advantageous if the moisture content determining device comprises signalling means for delivering a signal when, in use, the determined height is smaller than the predetermined height. As a result, greater irregularities in the material flow greater than still acceptable irregularities can be detected and reported, for example optically or acoustically, since they can lead to an unreliable determination of the moisture content. The device may furthermore be additionally configured to reduce the velocity at which the conveying element moves, for example temporarily or permanently, on the basis of the aforesaid delivered signal if the height is lower than desired. Assuming that bulk material is supplied to the device in a continuous flow, the layer height of the bulk material will then increase. Alternatively, and with the same effect, the device may additionally be configured to increase the rate at which bulk material is supplied to device, for example temporarily or permanently, on the basis of the aforesaid delivered signal when the height is lower than desired, whilst the velocity at which the conveying element moves remains the same.

It is furthermore advantageous if the weighing device comprises a belt weighing device. Preferably, the belt weighing device comprises a weighing platform which has a surface area equal to that of the weighing region and which is provided directly below the load-carrying surface, on which weighing platform the load-carrying surface rests. The weighing platform may be supported on the frame of the device via at least one weighing sensor, such as a force sensor. It is very advantageous in that regard if the load-carrying surface is flexible in a vertical direction, as in the case of a conveyor belt.

To realise a very precise determination of the mass, it is advantageous if the weighing platform is supported on the frame of the device via a force sensor, preferably via at least two force sensors which are spaced some distance apart, seen in the conveying direction.

In a very compact embodiment, the at least one moisture sensor is incorporated in the weighing device, preferably directly below the weighing platform. Within this framework, the height measuring device is furthermore preferably provided above the weighing device and/or the at least one moisture sensor.

It is furthermore advantageous if the length of the weighing region is at least substantially the same as that of the moisture measuring region. Furthermore preferably, the weighing region is at least substantially identical to the moisture measuring region.

Within the context of achieving a high measuring accuracy it is advantageous if the length of the weighing region is greater than, preferably two times greater than, the width of the load-carrying surface, or preferably also of the weighing region.

It is advantageous if the height measuring device is provided above the load-carrying surface such that the bulk material passes under the height measuring device in use. This makes it possible to carry out a measurement in an efficient manner.

Preferably, the height measuring device comprises at least one optical sensor, preferably comprising a CCD element, which is directed downward toward the load-carrying surface, for optically determining a height profile of the bulk material. Using such an optical sensor, the height, or in other words, a height profile, of the bulk material can be accurately determined over the width of the load-carrying surface. In a preferred embodiment, a light source of the optical sensor may comprise a laser light source. It is also conceivable that a row of optical sensors distributed over the width is provided. Within the scope of the present invention it is also conceivable to make use of one or more acoustic sensors for acoustically determining a height profile of the bulk material.

The moving device preferably comprises a displacement sensor that is operatively connected to the conveyor belt. The displacement sensor is preferably a measuring wheel. Alternatively, the displacement sensor may be a pulse generator which is connected to a freewheel driven by the conveyor belt or, for example, a photocell used in combination with markings such as a row of holes in the conveyor belt.

The device preferably comprises temperature determining means for determining a temperature of the bulk material. The moisture content determining device is in that case operatively connected to the temperature determining means, so that the influence of the temperature-dependent dielectric constant of moisture, such as water, is also taken into account in the determination of the moisture content of the bulk material in use, which further enhances the degree of accuracy. Alternatively it is conceivable that a temperature of the bulk material determined separately from the device is used as input by the moisture content determining device for determining the moisture content. The temperature determining means are quite preferably configured to determine the temperature by infrared means. The temperature determining means are preferably provided above the load-carrying surface for determining the temperature of the bulk material from above. In this way every temperature variation in said bulk material is measured with a very short response time.

In an alternative embodiment, the height determining device comprises a blocking element which extends across the width of the load-carrying surface, at a predetermined height above the load-carrying surface with a bottom edge thereof, which functions to achieve that a height of the bulk material passing under the blocking element is limited to the predetermined height in use. Thus an upper limit of the layer height of the bulk material on the conveying element is fixed in use. The aforesaid predetermined height of the blocking element may be a fixed height, or a height that can be adjusted using the adjusting means. The blocking element may also be rotatable about an axis of rotation that extends transversely to the conveying direction. The blocking element may in that case comprise blades which, upon rotation of the blocking element in a direction opposite the conveying direction, force bulk material whose height exceeds the aforesaid predetermined height back in upstream direction. In this way a possible build-up of bulk material directly upstream of the blocking element is effectively prevented or at least greatly reduced.

The present invention also relates to a method for determining the moisture content of bulk material from a flow of inhomogeneous bulk material, such as woodchips or potato products, using a device according to the invention as described above, which method comprises the steps of:
- conveying bulk material past the height determining device, the weighing device and the moisture content determining device by means of the conveying element, in the conveying direction,
- determining displacement in the conveying direction of the load-carrying surface by means of the displacement measuring device,
- determining a height of the bulk material passing the height determining device by means of the height determining device,
- determining a mass of the bulk material in the weighing region by means of the weighing device,
- determining an amount of moisture in the bulk material in the moisture measuring region by means of the at least one moisture measuring sensor of the moisture content determining device,
- dynamically determining the moisture content of the bulk material by means of the moisture content determining device on the basis of the displacement and the amount of moisture as determined and the height and mass as determined.

Advantages of the method according to the invention are analogous to the above-described advantages of the device according to the invention.

The invention also relates to a method for processing a flow of inhomogeneous bulk material such as woodchips or potato products, using a device according to the invention as described above, which method comprises the steps of:
- determining the moisture content of the bulk material, using the above-described method according to the invention, and
- drying the bulk material upstream and/or downstream of the device, using a respective drying device, setting a drying time or drying capacity of the drying device in dependence on the moisture content as determined, and/or
- moisturising the bulk material upstream and/or downstream of the device, using a respective moisturising device, wherein a moisturising time or a moisturising capacity of the moisturising device is set in dependence on the moisture content as determined, and/or
- frying the bulk material downstream of the device, using a frying device, wherein a frying time or a frying capacity of the frying device is set in dependence on the moisture content as determined, and/or
- incinerating the bulk material, preferably being woodchips, downstream of the device, using an incineration boiler, wherein incineration parameters are set in dependence on the moisture content as determined.

Using such a method, including the steps of drying and/or moisturising, a flow of bulk material whose moisture content is to a high degree uniform or at least has a pre-determined, desired level can be realised in a highly efficient and accurate manner.

When used with a frying product, such as French fries, the bulk material is preferably dried upstream of the device and fried downstream of the device.

The present invention will now be explained by means of a description of two preferred embodiments of devices according to the invention with reference to the following schematic figures, in which:
Figure 1 is a longitudinal sectional view through the centre, seen in transverse direction, of a first preferred embodiment of a device according to the present invention,
Figure 2 is a top plan view of the device of figure 1;
Figure 3 is a cross-sectional view along the line III-III in figure 2;
Figure 4 is a detail view of the device of figure 3;
Figure 5 is a top plan view of a second preferred embodiment of a device according to the invention; and
Figure 6 is a sectional view along the line VI-VI in figure 5.

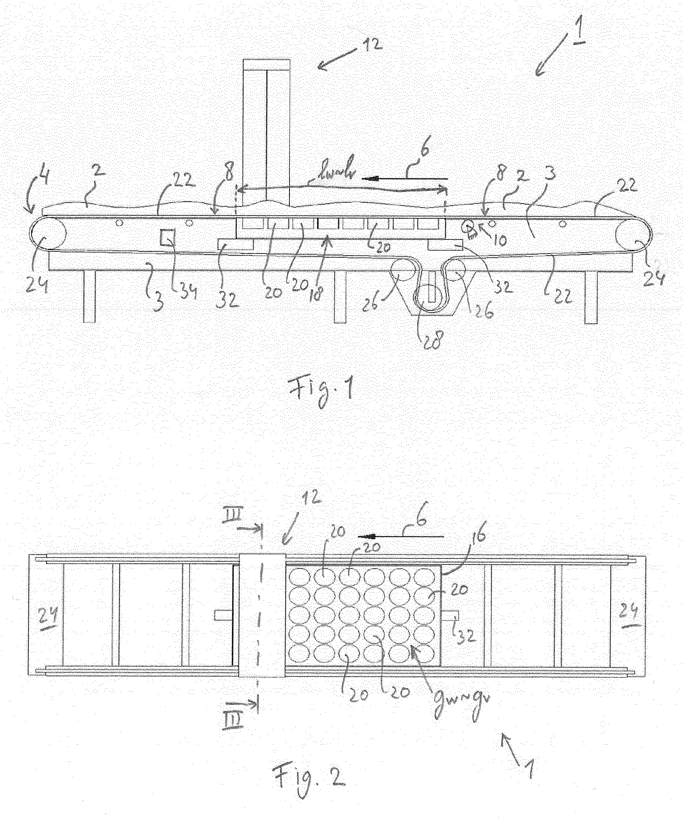

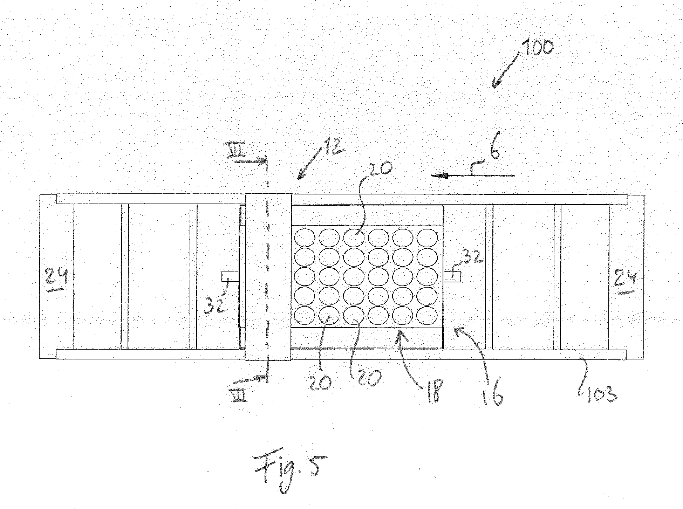

The device 1 as shown in figures 1-4 and the device 100 shown in figures 5-6 are designed for dynamically determining a moisture content of an inhomogeneous bulk material such as woodchips or potato products. The devices are to a great extent similar to each other, and identical parts thereof or parts having substantially the same function or construction are indicated by the same numerals.

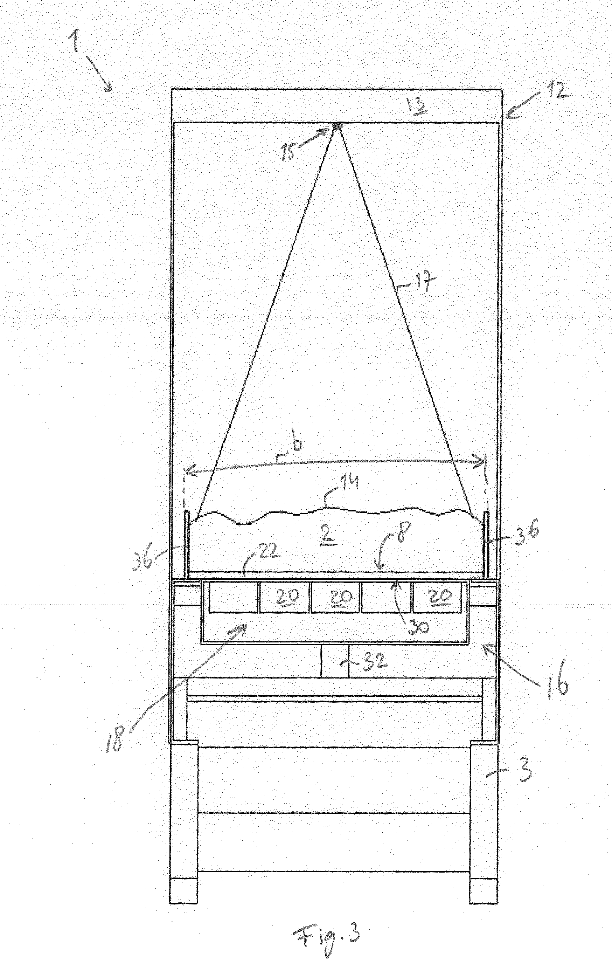

The device 1 has a frame 3 and a conveying element 4 formed by a conveyor belt 22 that passes over pulleys 24 which are rotatably connected to the frame 3 of the device 1. The conveyor belt 22 also passes over pulleys 26 and a tension pulley 28, so that a desired tension can be maintained in the conveyor belt 22. At an upper side of the device 1, the conveyor belts 22 extends substantially horizontally, forming a load-carrying surface 8 for conveying the bulk material 2 in a conveying direction 6. It is also conceivable within the scope of the invention that the load-carrying surface, and thus for example also a conveyor belt that forms the load-carrying surface, exhibits a slope, for example a slight upward slope. At least one of the pulleys 24, 26, 28 is driven for moving the conveyor belt 22 in the conveying direction 6. In use, the bulk material rests on the load-carrying surface 8. The load carrying surface 8 has a width b (see figure 3) that is determined by a width of the conveyor belts 22 in combination with upright side walls 36 of the frame 3. The bulk material 2, for example coming from a drying device, can be deposited on an upstream end of the conveyor belt 22 (by means not shown), and be conveyed onward or be discharged at the downstream end of the conveyor belt 22 (by means not shown), for example to a frying device in the case of a food product such as French fries or to an incineration boiler in the case of woodchips.

The device 1 further comprises a displacement measuring device 10 formed by a runner 10 which rolls along the conveyor belt 22 without slip, at least with the least possible slip in use, so as to thus determine the movement of the load-carrying surface 8 or at least a measuring value connected therewith.

The device 1 further comprises a height determining device 12 which, as shown in particular in figure 3, is provided above the load-carrying surface 8 of the device 1 and which comprises a horizontal beam extending in the transverse direction, on the underside of which a downwardly directed optical sensor 15 comprising a CCD element is mounted for optically determining a height profile 14 (see figure 3), or in other words a height of the bulk material as a function of the transverse position, of the bulk material 2 as it passes under the height determining device 12. The optical "curtain" 17 or optical range of the optical sensor 15 is schematically shown.

The device 1 also comprises a weighing device formed by a belt weighing device 16 for determining the mass of bulk material 2 present on the load-carrying surface 8. The belt weighing device 16 is for that purpose provided with a weighing platform 30 (see figure 3) which extends over at least substantially the entire width b of the load-carrying surface and a length l_{w}, thus defining a weighing region g_{w}. The weighing platform 30 is a flat plate, which forms an upper surface of a box construction which is supported on the frame 3 of the device 1 via two force sensors 32. Using the force sensors 32, a mass of the bulk product present on the weighing platform 30, i.e. on the part of the conveyor belt 22 directly above the weighing platform, can be accurately and dynamically determined.

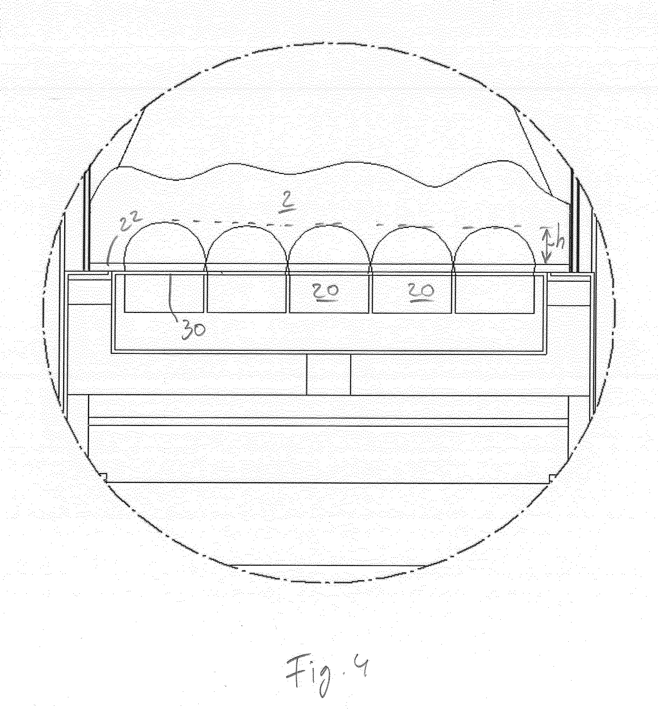

The device 1 further comprises a moisture content determining device 18 comprising a number of moisture measuring sensors 20 which are arranged in a gridlike pattern over the width b and a length lᵥ which together define a moisture measuring region gᵥ, as shown in particular in figure 2, so as to thus determine the presence of moisture in the bulk material present in the entire moisture measuring region. The conveyor belt 22 is not shown in figure 2, so that the moisture measuring sensors 20 can be clearly illustrated. The moisture measuring sensors 20 are provided in the aforesaid box construction of the belt weighing device 16, directly below the weighing platform 30 thereof, so that the moisture measuring sensors 20, only separated by the weighing platform 30 and the conveyor belt 22, can irradiate the bulk material 2. More specifically, the moisture measuring sensors 20 are high-frequency moisture sensors, which irradiate the bulk material 2 upward through the load-carrying surface 8 of the conveying element 4 at a frequency of less than about 3 GHz and a power of less than about 1 milliwatt. The sensors 20 used here are configured to irradiate the bulk material only over a lower part of the layer height, or in other words, over a predetermined height h thereof. See figure 4, in which said height h is indicated, as are the (semicircular) radiation ranges of the respective moisture measuring sensors 20.

As already said before, in order to obtain a highly accurate, very compact device, the moisture measuring sensors 20 are integrated in the weighing device 16. In addition, l_{w} is at least substantially the same as Lᵥ, so that gᵥ is thus approximately equal to g_{w}. The height measuring device 12 is also provided above the weighing device 16.

The moisture content determining device 18 further comprises a processing unit 34, which is operatively connected to moisture measuring sensors 20 and also to the displacement measuring device 10, the height determining device 12 and the weighing device 16. The processing unit 34 is used for reading signals from the aforesaid sensors and devices for determining the moisture content of the bulk material 2 from the flow of bulk material on the basis thereof.

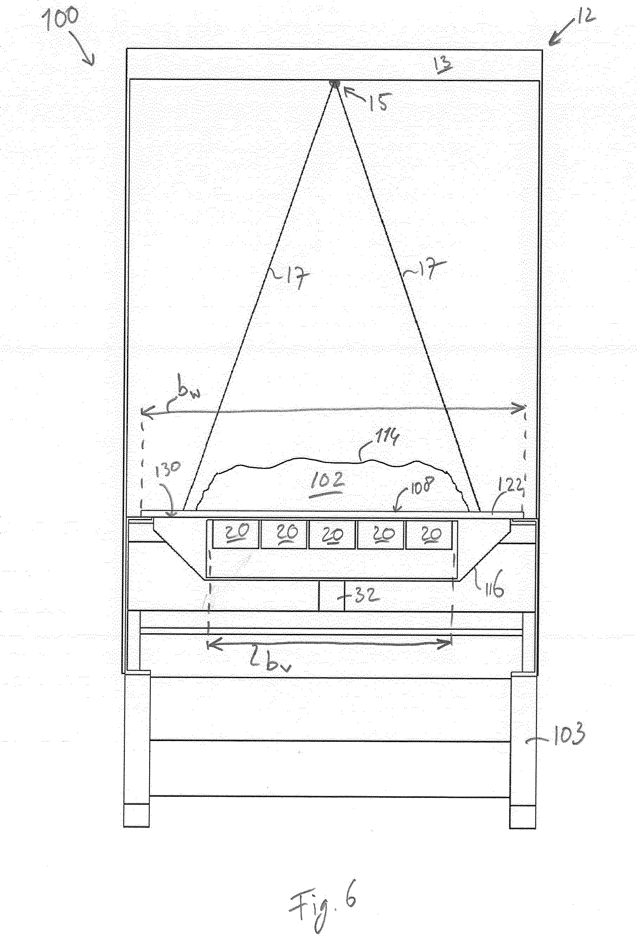

The device 100 according to figure 5 and figure 6 is largely similar to the device 1 shown in figures 1-4. Accordingly, only the relevant differences with the device 1 will be discussed hereinafter. For the rest, reference is made to the above description of the device 1. In figure 5 the conveyor belt 22 is not shown, so that the moisture measuring sensors 20 can be clearly illustrated.

The device 100 has a frame 103. The conveyor belt 122 defines a maximum width b_{w} of the load-carrying surface 108. In the weighing region, the conveyor belt 122 is supported over at least substantially the entire width b_{w} thereof by the weighing platform 130 of the weighing device 116. Upright edges such as the edges 36 of the device 1 are not provided, however, since the device is used in such a manner that, in use, the bulk material will not extend over the entire width of the load-carrying belt 122 but only over a central part thereof. It is in this part that the moisture measuring sensors 20 are provided, so that in use the width bᵥ of the moisture measuring region is only slightly smaller than a width of the flow of the bulk material 102, as shown in figure 6. The height determining device 12 is configured to determine the height profile 114 of the bulk material 102. Due to the absence of upright walls 36, such an embodiment of a device according to the invention is very suitable for use with food products such as French fries, since very little fouling will occur in the device, because the bulk material only makes contact with the conveyor belt 122. Because of this, cleaning of the device 100 can furthermore take place in a simple and effective manner.

## Claims

1. A device (1) for determining the moisture content of bulk material (2) from a flow of inhomogeneous bulk material such as woodchips or potato products, comprising:
- a conveying element (4) for conveying the bulk material (2) in a conveying direction (6) through the device (1) for thus forming the flow of the bulk material, comprising a load-carrying surface (8) for carrying the bulk material being conveyed, which load-carrying surface has a width (b) transversely to the conveying direction,
- a displacement measuring device (10) configured to determine displacement of the load-carrying surface (8) in the conveying direction (6),
- a height determining device (12) configured to determine, over at least substantially the entire width (b) of the load-carrying surface, a height of the bulk material (2) moving past the height determining device,
- a weighing device configured to determine a mass of bulk material (2) present on the load-carrying surface (8) in use, in a weighing region (g_{w}) that extends over at least substantially the entire width (b) of the load-carrying surface and over a length (l_{w}), seen in the conveying direction (6), at least equal to half the aforesaid width (b),
- a moisture content determining device (18) comprising at least one in-line high-frequency moisture measuring sensor (20), which is configured to determine an amount of moisture in the bulk material present in a moisture measuring region (gᵥ) that extends over a width of at least half the width (b) of the load-carrying surface and a length (lᵥ), seen in the conveying direction, at least equal to half the aforesaid width (b), by irradiating the bulk material in the moisture measuring region, upward through the load-carrying surface (8) of the conveying element (4), with electromagnetic radiation at a frequency or frequencies from 1 Gigahertz to 3 Gigahertz,
wherein the moisture content determining device (18) is further operatively connected to the displacement measuring device (10), the height determining device (12) and the weighing device, being configured to determine the moisture content of the bulk material (2) on the basis of the displacement and the amount of moisture as determined and the height and mass as determined,
wherein the conveying element (4) comprises a conveyor belt (22) that forms the load-carrying surface (8), wherein the weighing device comprises a belt weighing device (16), wherein the belt weighing device comprises a weighing platform (30) which has a surface area equal to that of the weighing region (g_{w}) and which is provided directly below the load-carrying surface (8), on which weighing platform (30) the load-carrying surface rests, and wherein the at least one moisture sensor (20) is incorporated in the weighing device (16).

2. A device according to claim 1, wherein the at least one moisture sensor (20) is incorporated directly below the weighing platform (30) in the weighing device (16).

3. A device according to claim 1 or 2, wherein the moisture measuring region extends over substantially the entire width (b) of the load-carrying surface (8) and has a length (lᵥ) which is greater than, preferably two times greater than, the width (b) of the load-carrying surface (8).

4. A device according to claim 1, 2 or 3, wherein the weighing region (g_{w}) is at least substantially identical to the moisture measuring region (gᵥ).

5. A device according to one or more of the preceding claims, wherein the conveyor belt (22) is at least substantially homogeneous, preferably made of PVC or PU, or made up of a link belt, preferably of PP.

6. A device according to one or more of the preceding claims, wherein the at least one moisture measuring sensor (20) comprises a multitude of in-line moisture measuring sensors (20) which are distributed in a grid-like pattern over the aforesaid moisture measuring region (gᵥ).

7. A device according to one or more of the preceding claims, wherein the at least one moisture measuring sensor (20) is configured to irradiate the bulk material (2) with electromagnetic radiation at a power of less than about 1 milliwatt.

8. A device according to one or more of the preceding claims, wherein the at least one moisture sensor (20) is configured to irradiate the bulk material to a predetermined height thereof relative to the load-carrying surface (8) in use.

9. A device according to one or more of the preceding claims, wherein the weighing platform (30) is supported on a frame (3) of the device via at least one force sensor (32), preferably via at least two force sensors (32) which are spaced some distance apart, seen in the conveying direction.

10. A device according to one or more of the preceding claims, wherein the height determining device (12) is provided above the load-carrying surface (8) such that bulk material passes under the height determining device in use.

11. A device according to one or more of the preceding claims, wherein the height determining device (12) comprises at least one optical sensor (15) which is directed downward toward the load-carrying surface (8) for optically determining a height profile of the bulk material.

12. A device according to claim 11, wherein the at least one optical sensor (15) comprises a CCD element.

13. A device according to one or more of the preceding claims, wherein the displacement measuring device comprises a displacement sensor (10) that is operatively connected to the conveyor belt (22).

14. A method for determining the moisture content of bulk material (2) from a flow of inhomogeneous bulk material, such as woodchips or potato products, using a device (1) according to any one of the preceding claims, which method comprises the steps of:
- conveying bulk material past the height determining device (12), the weighing device and the moisture content determining (18) device by means of the conveying element (4), in the conveying direction (6),
- determining displacement in the conveying direction of the load-carrying surface by means of the displacement measuring device (10),
- determining a height of the bulk material passing the height determining device (12) by means of the height determining device (12),
- determining a mass of the bulk material in the weighing region by means of the weighing device (16),
- determining an amount of moisture in the bulk material in the moisture measuring region by means of the at least one in-line high-frequency moisture measuring sensor (20) of the moisture content determining device (18),
- determining the moisture content of the bulk material by means of the moisture content determining device on the basis of the displacement and the amount of moisture as determined and the height and mass as determined.

15. A method for processing bulk material from a flow of inhomogeneous bulk material such as woodchips or potato products, using a device (1) according to any one of claims 1- 13, which method comprises the steps of:
- determining the moisture content of the bulk material, using the method according to claim 14, and
- drying the bulk material upstream and/or downstream of the device, using a respective drying device, setting a drying time or drying capacity of the drying device in dependence on the moisture content as determined, and/or
- moisturising the bulk material upstream and/or downstream of the device (1), using a respective moisturising device, wherein a moisturising time or a moisturising capacity of the moisturising device is set in dependence on the moisture content as determined, and/or
- frying the bulk material downstream of the device (1), using a frying device, wherein a frying time or a frying capacity of the frying device is set in dependence on the moisture content as determined, and/or
- incinerating the bulk material, preferably being woodchips, downstream of the device (1), using an incineration boiler, wherein incineration parameters are set in dependence on the moisture content as determined.

## Patentansprüche

1. Vorrichtung (1) zum Bestimmen des Feuchtegehalts von Bulkmaterial (2) aus einem Fluss von inhomogenem Bulkmaterial, wie Holzschnitzeln oder Kartoffelprodukten, umfassend:
- ein Förderelement (4) zum Fördern des Bulkmaterials (2) in eine Förderrichtung (6) durch die Vorrichtung (1) hindurch, um dadurch den Fluss des Bulkmaterials zu bilden, umfassend eine Last tragende Oberfläche (8) zum Tragen des zu fördernden Bulkmaterials, wobei die Last tragende Oberfläche eine Breite (b) quer zu der Förderrichtung aufweist,
- eine Versatzmessvorrichtung (10), die ausgestaltet ist, um Versatz der Last tragenden Oberfläche (8) in die Förderrichtung (6) zu ermitteln,
- eine Höhenermittlungsvorrichtung (12), die ausgestaltet ist, um über mindestens im Wesentlichen die gesamte Breite (b) der die Last tragenden Oberfläche eine Höhe des Bulkmaterials (2) zu ermitteln, das sich an der Höhenermittlungsvorrichtung vorbei bewegt,
- eine Wiegevorrichtung, die ausgestaltet ist, um bei Gebrauch eine Masse des Bulkmaterials (2), das auf der Last tragenden Oberfläche (8) vorhanden ist, in einer Wiegeregion (g_{w}) zu ermitteln, die sich über mindestens im Wesentlichen die gesamte Breite (b) der Last tragenden Oberfläche und über eine Länge (l_{w}) erstreckt, die in der Förderrichtung (6) gesehen mindestens gleich der Hälfte der genannten Breite (b) ist,
- eine Feuchtegehaltermittlungsvorrichtung (18), die mindestens einen Inline-Hochfrequenz-Feuchtemesssensor (20) umfasst, der ausgestaltet ist, um eine Menge der Feuchtigkeit in dem Bulkmaterial zu ermitteln, die in einer Feuchtemessregion (gᵥ) vorhanden ist, die sich über eine Breite von mindestens der Hälfte der Breite (b) der Last tragenden Oberfläche und eine Länge (lᵥ) erstreckt, die in der Förderrichtung gesehen mindestens gleich der Hälfte der genannten Breite (b) ist, indem das Bulkmaterial in der Feuchtemessregion aufwärts durch die Last tragende Oberfläche (8) des Förderelements (4) hindurch mit elektromagnetischer Strahlung mit einer Frequenz oder Frequenzen von 1 Gigahertz bis 3 Gigahertz bestrahlt wird,
wobei die Feuchteermittlungsvorrichtung (18) des Weiteren funktional mit der Versatzmessvorrichtung (10), der Höhenermittlungsvorrichtung (12) und der Wiegevorrichtung verbunden ist und ausgestaltet ist, um den Feuchtegehalt des Bulkmaterials (2) basierend auf dem Versatz und der Menge an Feuchtigkeit wie ermittelt und der Höhe und Masse wie ermittelt zu ermitteln,
wobei das Förderelement (4) ein Förderband (22) umfasst, das die Last tragende Oberfläche (8) bildet, wobei die Wiegevorrichtung eine Bandwiegevorrichtung (16) umfasst, wobei die Bandwiegevorrichtung eine Wiegeplattform (30) umfasst, die eine Oberfläche gleich derjenigen der Wiegeregion (g_{w}) aufweist, und die direkt unterhalb der Last tragenden Oberfläche (8) bereitgestellt ist, wobei die Last tragende Oberfläche auf dieser Wiegeplattform (30) ruht, und wobei der mindestens eine Feuchtesensor (20) in die Wiegevorrichtung (16) eingebaut ist.

2. Vorrichtung nach Anspruch 1, wobei der mindestens eine Feuchtesensor (20) direkt unter der Wiegeplattform (30) in die Wiegevorrichtung (16) eingebaut ist.

3. Vorrichtung nach Anspruch 1 oder 2, wobei die Feuchtemessregion sich über im Wesentlichen die gesamte Breite (b) der Last tragenden Oberfläche (8) erstreckt und eine Länge (lᵥ) aufweist, die größer als die Breite (b) der Last tragenden Oberfläche (8) ist, vorzugsweise doppelt so groß.

4. Vorrichtung nach Anspruch 1, 2 oder 3, wobei die Wiegeregion (g_{w}) mindestens im Wesentlichen identisch mit der Feuchtemessregion (gᵥ) ist.

5. Vorrichtung nach einem oder mehreren der vorhergehenden Ansprüche, wobei das Förderband (22) mindestens im Wesentlichen homogen ist, vorzugsweise aus PVC oder PU gefertigt ist oder aus einem Gliederband zusammengesetzt ist, vorzugsweise aus PP.

6. Vorrichtung nach einem oder mehreren der vorhergehenden Ansprüche, wobei der mindestens eine Feuchtemesssensor (20) eine Vielzahl von Inline-Feuchtemesssensoren (20) umfasst, die in einem gitterartigen Muster über die genannte Feuchtemessregion (gᵥ) verteilt sind.

7. Vorrichtung nach einem oder mehreren der vorhergehenden Ansprüche, wobei der mindestens eine Feuchtemesssensor (20) ausgestaltet ist, um das Bulkmaterial (2) mit elektromagnetischer Strahlung mit einer Leistung von weniger als etwa 1 Milliwatt zu bestrahlen.

8. Vorrichtung nach einem oder mehreren der vorhergehenden Ansprüche, wobei der mindestens eine Feuchtesensor (20) ausgestaltet ist, um bei Gebrauch das Bulkmaterial auf eine vorgegebene Höhe davon relativ zu der Last tragenden Oberfläche (8) zu bestrahlen.

9. Vorrichtung nach einem der vorhergehenden Ansprüche, wobei die Wiegeplattform (30) auf einem Rahmen (3) der Vorrichtung über mindestens einen Kraftsensor (32), vorzugsweise mindestens zwei Kraftsensoren (32), die gesehen in der Förderrichtung in einer gewissen Distanz beabstandet sind, getragen wird.

10. Vorrichtung nach einem der vorhergehenden Ansprüche, wobei die Höhenermittlungsvorrichtung (12) oberhalb der Last tragenden Oberfläche (8) bereitgestellt wird, so dass bei Gebrauch das Bulkmaterial unter der Höhenermittlungsvorrichtung hindurch passiert.

11. Vorrichtung nach einem oder mehreren der vorhergehenden Ansprüche, wobei die Höhenermittlungsvorrichtung (12) mindestens einen optischen Sensor (15) umfasst, der abwärts in Richtung der Last tragenden Oberfläche (8) gerichtet ist, um optisch ein Höhenprofil des Bulkmaterials zu ermitteln.

12. Vorrichtung nach Anspruch 11, wobei der mindestens eine optische Sensor (15) ein CCD-Element umfasst.

13. Vorrichtung nach einem oder mehreren der vorhergehenden Ansprüche, wobei die Versatzmessvorrichtung einen Versatzsensor (10) umfasst, der funktional mit dem Förderband (22) verbunden ist.

14. Verfahren zum Ermitteln des Feuchtegehalts des Bulkmaterials (2) aus einem Fluss von inhomogenem Bulkmaterial, wie Holzschnitzeln oder Kartoffelprodukten, unter Verwendung einer Vorrichtung (1) nach einem der vorhergehenden Ansprüche, wobei das Verfahren die Schritte umfasst:
- Fördern von Bulkmaterial an der Höhenermittlungsvorrichtung (12), der Wiegevorrichtung und der Feuchtegehaltermittlungsvorrichtung (18) vorbei mittels des Förderelements (4) in der Förderrichtung (6),
- Ermitteln des Versatzes der Last tragenden Oberfläche in der Förderrichtung mittels der Versatzmessvorrichtung (10),
- Ermitteln einer Höhe des Bulkmaterials, welches die Höhenermittlungsvorrichtung (12) passiert, mittels der Höhenermittlungsvorrichtung (12),
- Ermitteln einer Masse des Bulkmaterials in der Wiegeregion mittels der Wiegevorrichtung (16),
- Ermitteln einer Menge an Feuchtigkeit in dem Bulkmaterial in der Feuchtemessregion mittels des mindestens einen Inline-Hochfrequenz-Feuchtemesssensors (20) der Feuchteermittlungsvorrichtung (18),
- Ermitteln des Feuchtegehalts des Bulkmaterials mittels der Feuchtegehaltermittlungsvorrichtung basierend auf dem Versatz und der Menge an Feuchtigkeit wie ermittelt und der Höhe und Masse wie ermittelt.

15. Verfahren zum Verarbeiten von Bulkmaterial aus einem Fluss von inhomogenem Bulkmaterial, wie Holzschnitzeln oder Kartoffelprodukten, unter Verwendung einer Vorrichtung (1) nach einem der Ansprüche 1 bis 13, wobei das Verfahren die Schritte umfasst:
- Ermitteln des Feuchtegehalts des Bulkmaterials unter Verwendung des Verfahrens nach Anspruch 14, und
- Trocknen des Bulkmaterials vorgeordnet und/oder nachgeordnet der Vorrichtung unter Verwendung einer jeweiligen Trockenvorrichtung, Festlegen einer Trocknungszeit oder Trocknungskapazität der Trocknungsvorrichtung in Abhängigkeit von dem Feuchtegehalt wie ermittelt, und/oder
- Befeuchten des Bulkmaterials vorgeordnet und/oder nachgeordnet der Vorrichtung unter Verwendung einer jeweiligen Befeuchtungsvorrichtung (1), wobei eine Befeuchtungszeit oder eine Befeuchtungskapazität der Befeuchtungsvorrichtung in Abhängigkeit von dem Feuchtegehalt wie ermittelt festgelegt wird, und/oder
- Frittieren des Bulkmaterials nachgeordnet der Vorrichtung (1) unter Verwendung einer Frittiervorrichtung, wobei eine Frittierzeit oder eine Frittierkapazität der Frittiervorrichtung in Abhängigkeit von dem Feuchtegehalt wie ermittelt festgelegt wird, und/oder
- Verbrennen des Bulkmaterials, das vorzugsweise Holzschnitzel ist, nachgeordnet zu der Vorrichtung (1) unter Verwendung eines Verbrennungsheizkessels, wobei die Verbrennungsparameter in Abhängigkeit von dem Feuchtegehalt wie ermittelt festgelegt werden.

## Revendications

1. Dispositif (1) pour déterminer la teneur en humidité de matière en vrac (2) à partir d'un flux de matière en vrac hétérogène telle que des copeaux de bois ou des produits à base de pomme de terre, comprenant :
- un élément de transport (4) pour transporter la matière en vrac (2) dans une direction de transport (6) à travers le dispositif (1) pour former ainsi le flux de la matière en vrac, comprenant une surface porteuse de charge (8) pour porter la matière en vrac transportée, laquelle surface porteuse de charge a une largeur (b) transversalement à la direction de transport,
- un dispositif de mesure de déplacement (10) configuré pour déterminer un déplacement de la surface porteuse de charge (8) dans la direction de transport (6),
- un dispositif de détermination de la hauteur (12) configuré pour déterminer, sur au moins sensiblement la totalité de la largeur (b) de la surface porteuse de charge, une hauteur de la matière en vrac (2) passant devant le dispositif de détermination de la hauteur,
- un dispositif de pesage configuré pour déterminer une masse de matière en vrac (2) présente sur la surface porteuse de charge (8) lors de l'utilisation, dans une région de pesage (g_{w}) qui s'étend sur au moins sensiblement la totalité de la largeur (b) de la surface porteuse de charge et sur une longueur (l_{w}), vue dans la direction de transport (6), au moins égale à la moitié de la largeur précitée (b),
- un dispositif de détermination de teneur en humidité (18) comprenant au moins un capteur de mesure de teneur en humidité à haute fréquence en ligne (20), qui est configuré pour déterminer une quantité d'humidité dans la matière en vrac présente dans une région de mesure d'humidité (gᵥ) qui s'étend sur une largeur d'au moins la moitié de la largeur (b) de la surface porteuse de charge et une longueur (lᵥ), vue dans la direction de transport, au moins égale à la moitié de la largeur (b) précitée, en irradiant la matière en vrac dans la région de mesure d'humidité, vers le haut à travers la surface porteuse de charge (8) de l'élément de transport (4), par un rayonnement électromagnétique à une fréquence ou des fréquences de 1 Gigahertz à 3 Gigahertz,
dans lequel le dispositif de détermination de teneur en humidité (18) est en outre relié de manière fonctionnelle au dispositif de mesure de déplacement (10), au dispositif de détermination de la hauteur (12) et au dispositif de pesage, étant configuré pour déterminer la teneur en humidité de la matière en vrac (2) sur la base du déplacement et de la quantité d'humidité tels que déterminés ainsi que de la hauteur et de la masse telles que déterminées,
dans lequel l'élément de transport (4) comprend une bande transporteuse (22) qui forme la surface porteuse de charge (8), où le dispositif de pesage comprend un dispositif de pesage sur bande (16), dans lequel le dispositif de pesage sur bande comprend une plateforme de pesage (30) qui a une aire égale à celle de la région de pesage (g_{w}) et qui est prévue directement en dessous de la surface porteuse de charge (8), sur cette plateforme de pesage (30) repose la surface porteuse de charge, et où l'au moins un capteur d'humidité (20) est incorporé dans le dispositif de pesage (16).

2. Dispositif selon la revendication 1, dans lequel l'au moins un capteur d'humidité (20) est intégré directement en dessous de la plateforme de pesage (30) dans le dispositif de pesage (16).

3. Dispositif selon la revendication 1 ou 2, dans lequel la région de mesure d'humidité s'étend sur sensiblement la totalité de la largeur (b) de la surface porteuse de charge (8) et a une longueur (lᵥ) qui est supérieure, de préférence deux fois supérieure, à la largeur (b) de la surface porteuse de charge (8).

4. Dispositif selon la revendication 1, 2 ou 3, dans lequel la région de pesage (g_{w}) est au moins sensiblement identique à la région de mesure d'humidité (gᵥ).

5. Dispositif selon une ou plusieurs des revendications précédentes, dans lequel la bande transporteuse (22) est au moins sensiblement homogène, de préférence réalisée en PVC ou PU, ou composée d'une bande articulée, de préférence en PP.

6. Dispositif selon une ou plusieurs des revendications précédentes, dans lequel l'au moins un capteur de mesure d'humidité (20) comprend une multitude de capteurs de mesure d'humidité en ligne (20) qui sont répartis selon un motif en forme de grille sur la région de mesure d'humidité (gᵥ) précitée.

7. Dispositif selon une ou plusieurs des revendications précédentes, dans lequel l'au moins un capteur de mesure d'humidité (20) est configuré pour irradier la matière en vrac (2) par un rayonnement électromagnétique à une puissance inférieure à environ 1 milliwatt.

8. Dispositif selon une ou plusieurs des revendications précédentes, dans lequel l'au moins un capteur d'humidité (20) est configuré pour irradier la matière en vrac à une hauteur prédéterminée de celui-ci par rapport à la surface porteuse de charge (8) lors de l'utilisation.

9. Dispositif selon une ou plusieurs des revendications précédentes, dans lequel la plateforme de pesage (30) est supportée sur un châssis (3) du dispositif via au moins un capteur de force (32), de préférence via au moins deux capteurs de force (32) qui sont espacés d'une certaine distance l'un de l'autre, vus dans la direction de transport.

10. Dispositif selon une ou plusieurs des revendications précédentes, dans lequel le dispositif de détermination de la hauteur (12) est prévu au-dessus de la surface porteuse de charge (8) de sorte que la matière en vrac passe sous le dispositif de détermination de la hauteur, lors de l'utilisation.

11. Dispositif selon une ou plusieurs des revendications précédentes, dans lequel le dispositif de détermination de la hauteur (12) comprend au moins un capteur optique (15) qui est dirigé vers le bas en direction de la surface porteuse de charge (8) pour déterminer de manière optique un profil de hauteur de la matière en vrac.

12. Dispositif selon la revendication 11, dans lequel l'au moins un capteur optique (15) comprend un élément CCD.

13. Dispositif selon une ou plusieurs des revendications précédentes, dans lequel le dispositif de mesure de déplacement comprend un capteur de déplacement (10) qui est relié de manière fonctionnelle à la bande transporteuse (22).

14. Procédé pour déterminer la teneur en humidité d'une matière en vrac (2) à partir d'un flux de matière en vrac hétérogène, telle que des copeaux de bois ou des produits à base de pomme de terre, en utilisant un dispositif (1) selon l'une quelconque des revendications précédentes, lequel procédé comprend les étapes qui consistent :
- à transporter la matière en vrac devant le dispositif de détermination de la hauteur (12), le dispositif de pesage et le dispositif de détermination de la teneur en humidité (18) au moyen de l'élément de transport (4), dans la direction de transport (6),
- à déterminer le déplacement dans la direction de transport de la surface porteuse de charge au moyen du dispositif de mesure de déplacement (10),
- à déterminer une hauteur de la matière en vrac passant par le dispositif de détermination de la hauteur (12) au moyen du dispositif de détermination de la hauteur (12),
- à déterminer une masse de la matière en vrac dans la région de pesage au moyen du dispositif de pesage (16),
- à déterminer une quantité d'humidité dans la matière en vrac dans la région de mesure d'humidité au moyen de l'au moins un capteur de mesure d'humidité à haute fréquence en ligne (20) du dispositif de détermination de la teneur en humidité (18),
- à déterminer de la teneur en humidité de la matière en vrac au moyen du dispositif de détermination de la teneur en humidité sur la base du déplacement et de la quantité d'humidité tels que déterminés et de la hauteur et de la masse telles que déterminées.

15. Procédé de traitement de matière en vrac à partir d'un flux de matière en vrac hétérogène telle que des copeaux de bois ou des produits à base de pommes de terre, en utilisant un dispositif (1) selon l'une quelconque des revendications 1 à 13, lequel procédé comprend les étapes qui consistent :
- à déterminer la teneur en humidité de la matière en vrac, en utilisant le procédé selon la revendication 14, et
- à sécher la matière en vrac en amont et/ou en aval du dispositif, en utilisant un dispositif de séchage respectif, en réglant un temps de séchage ou une capacité de séchage du dispositif de séchage en fonction de la teneur en humidité telle que déterminée, et/ou
- à humidifier la matière en vrac en amont et/ou en aval du dispositif (1), en utilisant un dispositif d'humidification respectif, dans lequel un temps d'humidification ou une capacité d'humidification du dispositif d'humidification est réglé(e) en fonction de la teneur en humidité telle que déterminée, et/ou
- à frire la matière en vrac en aval du dispositif (1), en utilisant un dispositif de friture, dans lequel un temps de friture ou une capacité de friture du dispositif de friture est réglé(e) en fonction de la teneur en humidité telle que déterminée, et/ou
- à incinérer la matière en vrac, de préférence qui représente des copeaux de bois, en aval du dispositif (1), en utilisant une chaudière d'incinération, où les paramètres d'incinération sont réglés en fonction de la teneur en humidité telle que déterminée.
